(19)

Europäisches Patentamt
European Patent Office
Office européen des brevets

(11) Veröffentlichungsnummer: **0 350 602 B1**

(12) # EUROPÄISCHE PATENTSCHRIFT

(45) Veröffentlichungstag der Patentschrift: **01.12.93**

(51) Int. Cl.5: **B23K 31/00**, //F04D29/26

(21) Anmeldenummer: **89109307.2**

(22) Anmeldetag: **23.05.89**

(54) **Verfahren zum Schweissen von Rädern für Radialventilatoren mittels Schweissroboter.**

(30) Priorität: **12.07.88 DE 3823509**

(43) Veröffentlichungstag der Anmeldung:
**17.01.90 Patentblatt 90/03**

(45) Bekanntmachung des Hinweises auf die Patenterteilung:
**01.12.93 Patentblatt 93/48**

(84) Benannte Vertragsstaaten:
**DE ES FR GB IT SE**

(56) Entgegenhaltungen:
**DE-A- 1 935 013** **DE-A- 3 007 098**
**DE-A- 3 631 154** **DE-A- 3 700 230**
**FR-A- 882 188** **GB-A- 350 763**
**GB-A- 2 108 411** **US-A- 4 322 200**
**US-A- 4 333 001**

(73) Patentinhaber: **BABCOCK-BSH AKTIENGESELLSCHAFT vormals Büttner-Schilde-Haas AG**
**Postfach 6**
**D-47811 Krefeld(DE)**

(72) Erfinder: **Hietzge, Richard**
**Albert-Schweitzer-Strasse 14**
**D-6430 Bad Hersfeld(DE)**

EP 0 350 602 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren gemäß dem Oberbegriff des Anspruchs 1.

Bei der Montage von Ventilatorrädern geringerer Leistung werden zum Beispiel die Fortsätze an Ober- und Unterkanten der Schaufeln durch Schlitze in den Rad- und Deckscheiben hindurchgesteckt und umgebogen.

Ein weiteres Verfahren zum Befestigen der Schaufeln an die Rad- und Deckscheibe ist das Nieten.

In dem DE-U 86 05 513 wird ein Gebläserad beschrieben, bei dem die Schaufeln mittels Nietzapfen, die durch entsprechende Öffnungen in die Scheiben hindurchgreifen mit den Scheiben verbunden sind.

Die Schaufeln des Laufrades der DE-A 36 05 852 sind mit Laschen versehen, die in entsprechend geformte Schlitze der Scheiben eingesetzt werden. Mit einem speziellen Nietwerkzeug werden Nieteinformungen an den Laschen erzeugt.

Die Schaufeln von den Rädern für Ventilatoren höherer Leistung werden wie zum Beispiel in der DE-A 28 09 597 erwähnt, an die beiden Scheiben geschweißt.

Zum Schweißen werden aufwendige Hilfsvorrichtungen zum Positionieren und Arretieren der Teile des Rades benötigt. Diese Hilfsvorrichtungen dienen auch dazu, Verzug während des Schweißens und beim Abkühlen zu verringern. Sie erschweren jedoch den Zugang zu den Innenseiten der Scheiben und führen zu einem umständlichen, zeitraubenden Schweißprozeß.

In der DE-A 33 19 641 ist ein weiteres Ventilarorrad beschrieben. Die Schaufeln haben an den Stirnkanten leistenförmige Fortsätze, die in langlochförmige Schlitze der Scheiben eingeführt werden. Die Schaufeln werden mit ihren Fortsätzen jeweils an den Außenseiten der Rad- bzw. Deckscheibe mit diesen verschweißt.

Mittels zusätzlicher Schweißpunkte werden die Schaufeln von innen im zentralen gewölbten Bereich der Deckscheibe angeschweißt.

Aufwendig bei diesem Verfahren ist, die Schlitze und die Fortsätze mit geringem Spiel aufeinanderpassend herzustellen und zusätzlich von innen Schweißpunkte im zentralen gewölbten Bereich der Deckscheibe zu setzen.

Aus der US-A-4 333 001 ist ein gattungsgemäßes Verfahren zum Schweißen von Laufrädern bekannt. Bei diesem Verfahren werden die Schaufeln des Laufrades auf einem Werkstückmanipulator mit einem Schweißroboter an die jeweilige Abdeckscheibe geschweißt.

Auch bei diesem Verfahren werden aufwendige Hilfsvorrichtungen zum Positionieren und Arretieren der Teile des Laufrades, insbesondere beim Schweißen der Schaufeln an die erste Abdeckscheibe, benötigt. Dies führt zu einem großen Aufwand durch Montage und Demontage dieser Hilfsvorrichtungen.

Die Aufgabe der Erfindung ist, ein Verfahren zum Schweißen eines Rades eines Radialventilators zu entwickeln bei dem mit möglichst geringem Aufwand große Stückzahlen gefertigt werden können.

Die Aufgabe wird erfindungsgemäß durch die Merkmale des Patentanspruchs 1 gelöst. Die Aufteilung des Schweißprozesses in Heften und Schweißen verbunden mit der Ausführung beider Arbeitsschritte mit einem Schweißroboter auf demselben Werkstückmanipulator ermöglicht das Schweißen von Ventilatorrädern in großer Stückzahl. Das erfindungsgemäße Verfahren zum Schweißen von Ventilatorrädern hat gleichzeitig folgende Vorteile:

- Das Anbringen der Schweißnähte im zweiten Arbeitsschritt wird durch das Heften im ersten Arbeitsschritt wesentlich vereinfacht. Während bei einem nicht gehefteten Rad Einzelteile durch eine aufwendige Spannvorrichtung in der richtigen Position arretiert werden müssen, ermöglicht das erfindungsgemäß zuvor geheftete Rad eine einfache Arretierung.
- Die stabile Verbindung der Schaufeln mit der Rad- und der Deckscheibe durch das Heften reduziert den Schweißverzug durch das Anbringen der Schweißnähte.
- Die von einem Schweißroboter hergestellten Heilstellen und Schweißnähte zeichnen sich durch hohe Qualität und hohe Reproduzierbarkeit aus. Die ebenfalls durch den Einsatz eines Schweißroboters erreichbare hohe Produktionsgeschwindigkeit ist ein wichtiger Vorteil für die Produktion großer Stückzahlen.
- Die Ausführung beider Arbeitsschritte auf einem Werkstückmanipulator erspart den vollständigen Umbau zwischen dem Heften und dem Schweißen und trägt so zu einer großen Produktionsgeschwindigkeit bei.
- Dadurch daß vor dem ersten Arbeitsschritt die Schaufeln, die Radscheibe und die Deckscheibe in zwei Stufen positioniert und arretiert werden, wobei in der ersten Stufe ein erster Teil und in einer zweiten Stufe ein zweiter Teil einer Spannvorrichtung benutzt wird und zwischen dem ersten und zweiten Arbeitsschritt der zweite Teil der Spannvorrichtung entfernt wird, wird eine einfache, schnelle Umrüstung zwischen den beiden Arbeitsschritten Heften und Schweißen ermöglicht.

Vorteil des Merkmals des Anspruchs 2 ist, daß während des Schweißens nur die Radscheibe arretiert bleibt. Die flache Form der Radscheibe ermöglicht eine Arretierung, bei der eine gute Zugänglichkeit des Schweißroboters zu den Ober- und Unterkanten der Schaufeln gewährleistet ist.

Das Merkmal des Anspruchs 3 hat den Vorteil, daß eine gemeinsame Arretierung der Schaufeln und der Deckscheibe zwischen den beiden Arbeitsschritten schnell zu lösen ist.

Das Merkmal des Anspruchs 4 vereinfacht das Positionieren der Schaufeln gegen die Radscheibe und erhöht die Stabilität des gehefteten Rades.

Durch das Merkmal des Anspruchs 5 wird ermöglicht, daß die Schaufeln in der Nähe des Innendurchmessers der Deckscheibe an einer von innen schwer zugänglichen Stelle von außen angeheftet werden können.

Eine Vereinfachung des Positionierens der Deckscheibe gegen die Schaufeln und eine weitere Erhöhung der Stabilität bewirkt das Merkmal des Anspruchs 6.

Vorteil des Merkmals des Anspruchs 7 ist, daß durch die mit dem Schweißroboter innen angebrachten Heftstellen ein stabiles, geheftetes Rad hergestellt wird, wodurch eine einfache Arretierung zum Schweißen ermöglicht und der Schweißverzug verringert wird.

Das Merkmal des Anspruchs 8 ist besonders für größere Ventilatorenräder, bei denen die Spitzen der Schaufeln dem Schweißroboter zugänglich sind, geeignet. Es erhöht die Stabilität des gehefteten Rades.

Das Merkmal des Anspruchs 9 ist besonders für kleinere Ventilatorenräder geeignet. Es erhöht ebenfalls die Stabilität des gehefteten Rades.

Das Merkmal des Anspruchs 10 ist besonders für Industrieventilatoren, die einer hohen Beanspruchung ausgesetzt sind, vorteilhaft. Von innen doppelseitig angebrachte Schweißnähte sind besonders stabile Verbindungen der Schaufeln mit der Rad- und der Deckscheibe.

Besonders für Lüftungsventilatoren ist das Merkmal des Anspruchs 11 geeignet. Bei geringerer Beanspruchung haben wechselseitig unterbrochene Kehlnähte den Vorteil, daß sie weniger Schweißmaterial benötigen und geringeren Schweißverzug verursachen.

Das Merkmal des Anspruchs 12 erhöht zusätzlich die Produktionsgeschwindigkeit und bewirkt eine effektive Nutzung des Schweißroboters.

Die Verwendung einer Spannvorrichtung gemäß Anspruch 13 hat folgende Vorteile:

- Die zweiteilige Spannvorrichtung, bei der die Arretierung der Schaufeln und der Deckscheibe durch ein eigenes pneumatisches Element vorgenommen wird, ermöglicht ein schnelles Umrüsten des Werkstückmanipulators zwischen dem Heften und dem Schweißen.
- Die bleibende Arretierung der Radscheibe durch den ersten Teil der Spannvorrichtung ermöglicht wegen der flachen Form der Radscheibe eine gute Zugänglichkeit des Schweißroboters zu den Ober- und Unterkanten der Schaufeln.

Vorteil des Merkmals des Anspruchs 14 ist, daß ein Bajonettverschluß einfach herzustellen ist.

Das Merkmal des Anspruchs 15 ermöglicht eine schnelle Arretierung der Radscheibe. Vorteil des Merkmals ist auch, daß mit der beschriebenen Anordnung Radscheiben unterschiedlicher Dicke arretiert werden können.

Vorteil des Merkmals des Anspruchs 16 ist, das durch den Außenring die Druckelemente vor Staub und Schmutz geschützt werden.

Vorteil des Merkmals des Anspruchs 17 ist, daß die Schaufeln und die Deckscheibe schnell positioniert und arretiert werden können.

Durch das Merkmal des Anspruchs 18 wird die Deckscheibe schnell und einfach zentriert.

Die Zeichnung dient der Erläuterung der Erfindung anhand schematisch dargestellter Beispiele.

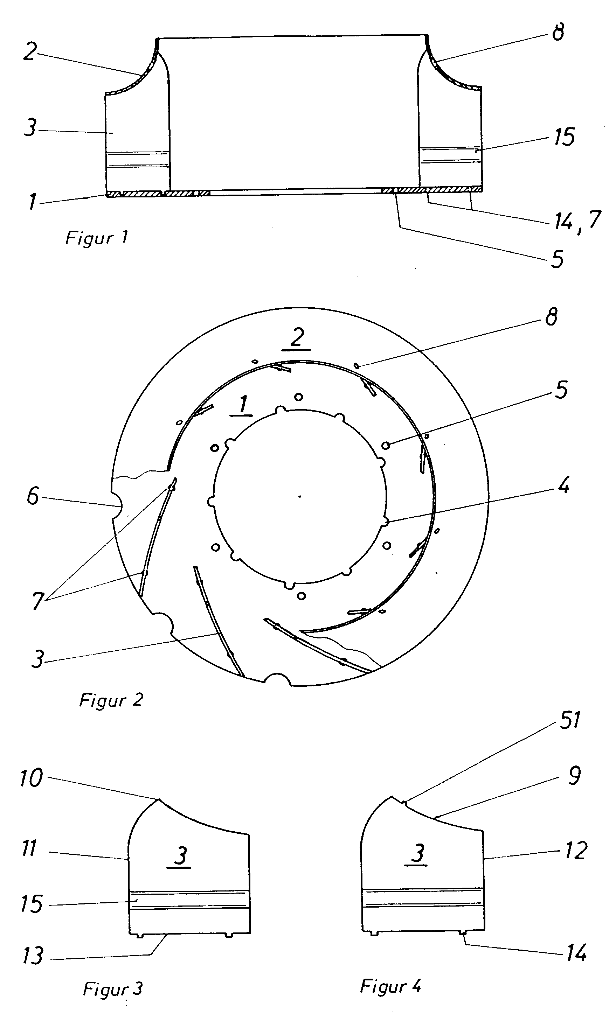

Figur 1 zeigt einen Querschnitt durch das Ventilatorrad.

Figur 2 zeigt eine Draufsicht auf das Ventilatorrad, bei der ein Teil der Deckscheibe weggebrochen ist.

In den Figuren 3 und 4 sind die Schaufeln des ersten und des dritten Beispiels dargestellt.

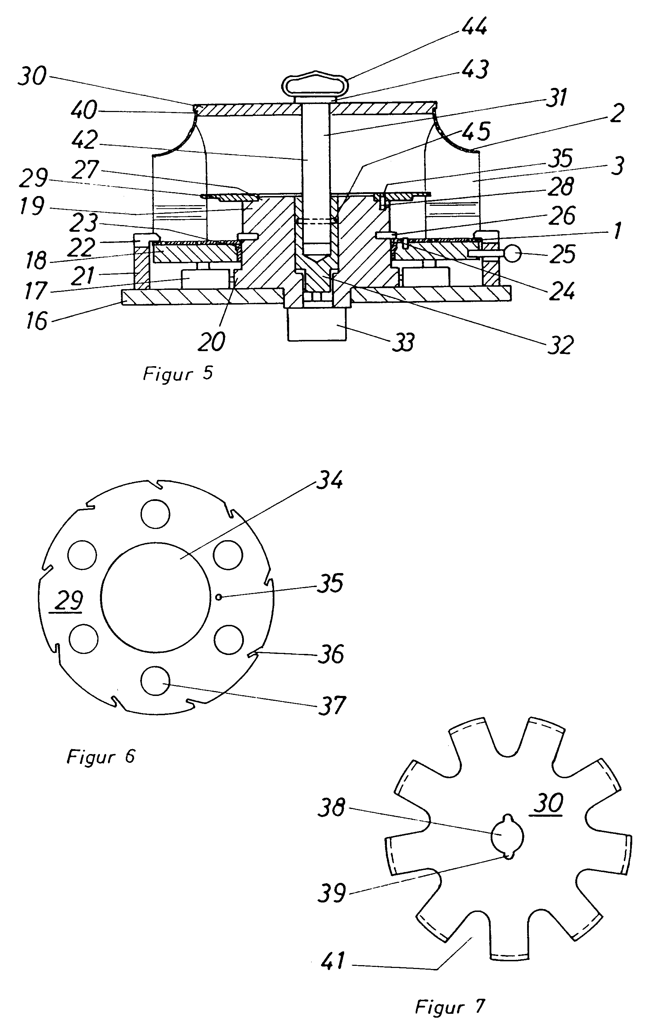

Figur 5 zeigt einen Querschnitt durch das Ventilatorrad und die Spannvorrichtung.

Figur 6 zeigt eine Draufsicht auf die Schlitzscheibe und Figur 7 eine Draufsicht auf die Anpreßplatte.

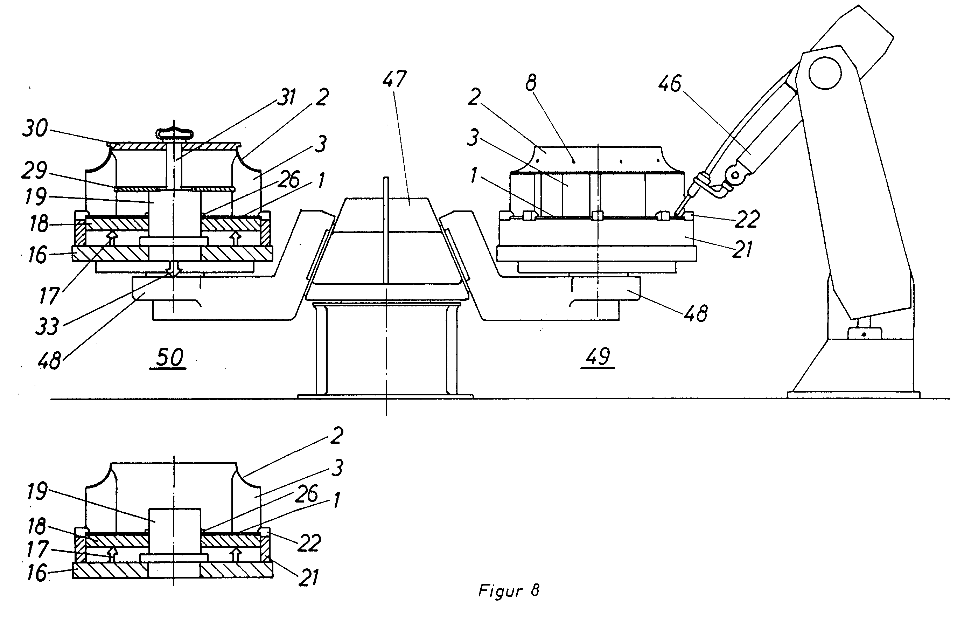

Die Anordnung des Schweißroboters und der beiden Werkstückmanipulatoren ist in Figur 8 dargestellt.

Ein Rad eines Radialventilators des ersten Beispiels besteht aus einer Radscheibe 1, einer Deckscheibe 2 und aus neun Schaufeln 3.

Die Radscheibe 1 ist eine runde Blechscheibe mit einer zentralen Bohrung, deren Durchmesser etwa 20 bis 40 % des Außendurchmessers der Radscheibe 1 beträgt. Am Innendurchmesser der Radscheibe befinden sich neun gleichmäßig verteilte, halbkreisförmige Ausstanzungen 4. Zur Befestigung der Motornabe ist die Radscheibe 1 in der Nähe der zentralen Bohrung außerhalb der Ausstanzungen 4 mit sechs gleichmäßig auf einem Teilkreis verteilten Bohrungen 5 ausgestattet. Die Ausstanzungen 4 und die Bohrungen 5 sind zueinander versetzt angeordnet. Am Außendurchmesser der Radscheibe 1 sind neun halbkreisförmige Austanzungen 6 angebracht. Die Ausstanzungen 6 sind größer als die Ausstanzungen 4 am Innendurchmesser.

Pro Schaufel 3 befinden sich in der Radscheibe 1 zwei Bohrungen 7, deren Durchmesser das Drei- bis Sechsfache der Blechdicke der Schaufeln 3 betragen. Die Bohrungen 7 sind den Positionen der Schaufeln 3 entsprechend gleichmäßig verteilt auf zwei Teilkreisen angeordnet. Der innere Teilkreis liegt außerhalb der Bohrungen 5 zur Befestigung der Motornabe. Der Durchmesser des inneren Teilkreises der Bohrungen 7 beträgt etwa 50 bis 70 % und der des äußeren Teilkreises etwa 90 % des Außendurchmessers der Radscheibe 1.

Die Deckscheibe 2 ist ein rundes, düsenförmig gebogenes Blech mit einer zentralen Bohrung. Der Innendurchmesser der Deckscheibe 2 beträgt 50 bis 80 % ihres Außendurchmessers, der genauso groß ist wie der der Radscheibe 1. Die Blechdicke der Deckscheibe 2 ist etwa halb so groß wie die der Radscheibe 1. In der Nähe des Innendurchmessers weist die Deckscheibe 2, auf einem Teilkreis gleichmäßig verteilt, neun durch die Verformung der Deckscheibe 2 langgezogene Bohrungen 8 auf.

Eine Schaufel 3 dieses Ventilators besteht aus einer annähernd quadratischen Blechscheibe einer Blechdicke, die etwa der der Deckscheibe 2 entspricht. Die Oberkante 9 der Schaufel weist eine Spitze 10, deren Winkel etwa 90° beträgt, auf. Der von der Spitze 10 aus radial nach außen gehende Teil der Oberkante 9 ist entsprechend der Form der Deckscheibe 2 konkav geformt, der nach innen gehende, kürzere Teil der Oberkante 9 ist konvex abgerundet. Die Deckscheibe 2 liegt so auf den radial äußeren Teilen der Oberkanten 9, daß sich die Bohrungen 8 genau oberhalb der Oberkanten 9 in der Nähe der Spitzen 10 der Schaufeln 3 befinden.

Die radial inneren Seitenkanten 11 und die radial äußere Seitenkante 12 einer Schaufel 3 stehen senkrecht zur Unterkante 13, die zwei Zungen 14 jeweils in der Nähe der Seitenkanten 11, 12 aufweist. Die Länge einer Zunge 14 entspricht etwa der Dicke der Radscheibe 1, die Breite beträgt direkt an der Unterkante 13 etwa das Zwei- bis Vierfache der Blechdicke der Schaufeln 3 und verjüngt sich nach unten um etwa ein Drittel.

Die Fläche einer Schaufel 3 ist derart gekrümmt, daß die Oberkante 9 und die Unterkante 13 auf einem Kreisbogen liegen. Die Schaufeln 3 sind auf dem äußeren Teil der Radscheibe 1 strahlenförmig angebracht. Die inneren Seitenkanten 11 der Schaufeln 3 sind um einen spitzen Winkel aus der Richtung zur Radachse gedreht.

Etwas unterhalb der Mitte parallel zur Unterkante 13 befindet sich in den Schaufeln 3 jeweils eine Versteifungssicke 15, die unterschiedlichen Verzug bei der Verwendung verschiedener Blechsorten bei der Produktion der Schaufeln 3 verhindert.

Eine Spannvorrichtung besteht aus einem ersten und einem zweiten Teil. Der erste Teil zum Positionieren und Arretieren der Radscheibe 1 umfaßt eine Grundplatte 16, vier pneumatische Elemente 17, eine Druckplatte 18 und eine Nabe 19. Die Grundplatte 16 und die Druckplatte 18 bestehen aus etwa gleichdicken Stahlplatten mit jeweils einer dem Innendurchmesser der Radscheibe 1 entsprechenden, zentralen Bohrung. Der Außendurchmesser der Druckplatte 18 entspricht ebenfalls dem der Radscheibe 1, der Außendurchmesser der Grundplatte 16 ist etwa um ein Viertel größer.

Die Druckplatte 18 liegt auf den vier Druckelementen 17, die gleichmäßig verteilt auf der Grundplatte 16 befestigt sind.

Die Nabe 19 ragt durch die zentrale Bohrung der Grundplatte 16 und durch die der Druckplatte 18. Sie besteht aus einem Stahlzylinder mit einer abgestuften Mittelbohrung und weist oberhalb der Grundplatte 16 einen Kranz 20 auf, an dem die Nabe 19 an die Grundplatte 16 angeschraubt ist.

Auf der Grundplatte 16 ist ein Außenring 21, der die pneumatischen Elemente 17 und die Druckplatte 18 umfaßt, angeschraubt. Auf dem Außenring 21 sind gleichmäßig verteilt neun äußere Spannocken 22 befestigt. Die äußeren Spannocken 22 ragen zwischen den Schaufeln 3 über die Radscheibe 1 hinaus.

Am Innendurchmesser der Druckplatte 18 befindet sich ein Bronzeeinsatz 23. Auf der Oberseite der Druckplatte 18 ist ein Justierstift 24 angebracht, der die Radscheibe 1 an einer der Bohrungen 5 justiert. Seitlich an der Druckplatte 18 ist ein Griff 25 zum Drehen der Druckplatte 18 befestigt.

An der Nabe 19 sind oberhalb des Kranzes 20 innere Spannocken 26 befestigt. Die inneren Spannocken 26 sind Stifte, die durch Preßsitz in der Nabe 19 gehalten werden und an denen die Radscheibe 1 im arretierten Zustand ebenso wie an den äußeren Spannocken 22 anliegt.

Die Nabe 19 ist an ihrer Stirnfläche mit einem Bund 27 und außerhalb des Bundes 27 mit einem Justierstift 28 versehen.

Der zweite Teil der Spannvorrichtung besteht aus einer Schlitzscheibe 29 zum Senkrechtpositionieren der Schaufeln 3, einer Anpreßplatte 30 und einem Anzugbolzen 31, der über ein Verschlußelement 32 mit einem pneumatischen Element 33 verbunden ist. Das pneumatische Element 33 ist an der Grundplatte 16 befestigt.

Die Schlitzscheibe 29 ist eine runde Stahlplatte mit einer etwas geringeren Dicke als die der Druckplatte 18. Sie weist in der Mitte eine Bohrung 34, deren Durchmesser dem des Bundes 27 der Nabe 19 entspricht, auf, wodurch sie zentrisch auf der oberen Stirnfläche der Nabe 19 liegt. Durch eine Bohrung 35 der Schlitzscheibe 29 ragt der Justierstift 28, durch den die Winkelposition der Schlitzscheibe 29 festgelegt ist. An ihrem Außendurchmesser, der etwas kleiner ist als der Innendurchmesser der Deckscheibe 2, weist die Schlitzscheibe 29 neun der Lage der Schaufeln 3 entsprechend schräge Schlitze 36 auf, in die die radial inneren Seitenkanten 11 der Schaufeln 3 ragen. In der Schlitzscheibe 29 sind zur Gewichtsreduzierung mehrere größere Bohrungen 37.

Die Anpreßplatte 30 ist eine runde Stahlplatte, deren Dicke zwischen der der Schlitzscheibe 29 und der der Druckplatte 18 liegt. Die Anpreßplatte 30 hat eine Mittelbohrung 38 mit einem angearbeiteten Langloch 39. Sie weist an ihrem Außendurchmesser einen Absatz 40 zum Zentrieren der Deckscheibe 2 derart auf, daß der untere Teil der Anpreßplatte 30 einen etwas kleineren Durchmesser hat als der obere. Der obere Teil der Anpreßscheibe 30 ragt über die Deckscheibe 2 hinaus, die in diesem Bereich senkrecht nach oben geformt ist und an dem unteren Teil der Anpreßplatte 30 anliegt. Am Außendurchmesser der Anpreßplatte 30 sind neun, größere, V-förmige Aussparungen 41 vorhanden.

Der Anzugbolzen 31 besteht aus einem runden Stahlstab 42, an dessen oberen Ende sich eine kleine Platte 43 und darauf eine Öse 44 befindet. Der Stab 42 ist durch die Mittelbohrung 38 der Anpreßplatte 30 geführt und ragt durch die zentrische Bohrung 34 der Schlitzscheibe 29 in das Verschlußelement 32. Dabei liegt die kleine Platte 43 von oben auf der Anpreßplatte 30 auf.

Die Öse 44 besteht aus einem oval geformten Stahldraht, wobei die obere Seite zum Anhängen an ein Hebehilfsmittel einen Knick nach oben aufweist.

Im unteren Teil des Stabes 42 weist der Anzugbolzen 31 eine Querbohrung auf, in der ein an beiden Seiten herausragender Bajonettstift 45 sitzt. Der Bajonettstift 45 paßt durch das Langloch 39 an der Mittelbohrung 38 der Anpreßplatte 30. Der untere Teil des Stabes 42 mit dem Bajonettstift 45 bildet zusammen mit der Verschlußbuchse 32 einen Bajonettverschluß. Die Verschlußbuchse 32 weist passend zum Bajonettstift 45 zwei gegenüberliegende Längsschlitze und daran anschließend zwei Querschlitze auf.

Die Verschlußbuchse 32 ist beweglich in der Mittelbohrung der Nabe 19 gelagert, verjüngt sich entsprechend der Mittelbohrung der Nabe 19 nach unten und ist mit diesem unteren Teil an das pneumatische Element 33 geschraubt.

Eine Heft- und Schweißanordnung besteht aus einem Schweißroboter 46 und einem Drehtisch 47 mit zwei Werkstückmanipulatoren 48. Die beiden Spannvorrichtungen sind über die Grundplatten 16 an den Werkstückmanipulatoren 48 befestigt.

Einer der beiden Werkstückmanipulatoren 48 ist in Figur 8 in einer Schweißposition 49 dem Schweißroboter 46 zugewandt zu sehen, der andere demgegenüber in einer Montierposition 50.

Im Betrieb werden zum Schweißen eines Ventilatorrades die Schaufeln 3 auf einem der Werkstückmanipulatoren 48 in einem ersten Arbeitsschritt an die Radscheibe 1 und die Deckscheibe 2 geheftet und in einem zweiten Arbeitsschritt angeschweißt. Vor dem ersten Arbeitsschritt werden die Radteile auf dem Werkstückmanipulator 48 positioniert und arretiert, zwischen den beiden Arbeitsschritten der zweite Teil der Spannvorrichtung entfernt und nach dem zweiten Arbeitsschritt das geschweißte Rad entfernt.

Das Heften und Schweißen wird in der Schweißposition 49 vom Schweißroboter 46, die übrigen Arbeiten werden in der Montierposition 50 von einem Bediener durchgeführt.

Beim zweistufigen Positionieren und Arretieren der Radteile wird in einer ersten Stufe zuerst die Radscheibe 1 eingelegt, indem die zentrale Bohrung der Radscheibe 1 über die Nabe 19, die inneren und äußeren Ausstanzungen 4, 6 über die inneren und äußeren Spannocken 26, 22 und eine der Bohrungen 5 zur Befestigung der Motornabe über den Justierstift 24 auf der Druckplatte 18 geführt werden. Die Druckplatte 18 liegt dabei auf den entspannten pneumatischen Elementen 17 auf.

Die Radscheibe 1 wird nun zusammen mit der Druckplatte 18 mit dem Griff 25 um etwa eine halbe Schaufeleinteilung verdreht. Durch Betätigung der pneumatischen Elemente 17 wird die Druckplatte 18 mit eingelegter Radscheibe 1 gegen die inneren und äußeren Spannocken 26, 22 gedrückt und so die Radscheibe 1 in der durch den Justierstift 24 bestimmten Position arretiert.

In einer zweiten Stufe wird die Schlitzscheibe 29 so auf die Stirnfläche der Nabe 19 gelegt, daß sich der Bund 27 der Nabe 19 in der Bohrung 34 in der Mitte der Schlitzscheibe 29 und sich der Justierstift 28 auf der Stirnfläche der Nabe 19 in der Bohrung 35 der Schlitzscheibe 29 befinden. Die Schaufeln 3 werden nacheinander eingesetzt, indem jeweils die beiden Zungen 14 an der Unterkante 13 einer Schaufel 3 in die dafür vorgesehenen Bohrungen 7 der Radscheibe 1 und die innere Seitenkante 11 in den dazugehörenden Schlitz 36 der Schlitzscheibe 29 gesteckt werden.

Die Deckscheibe 2 wird so auf die Schaufeln 3 gelegt, daß sich die Bohrungen 8 in der Deckscheibe 2 genau über den Oberkanten 9 der Schaufeln 3 befinden. Auf die Deckscheibe 2 wird die Anpreßplatte 30 gebracht, so daß am Absatz 40 der untere Teil der Anpreßplatte 30 in die zentrale Öffnung der Deckscheibe 2 ragt und der obere Teil auf der hochgebogenen inneren Kante der Deckscheibe 2 aufliegt.

Der Stab 42 des Anzugbolzen 31 wird durch die Mittelbohrung 38 der Anpreßplatte 30, durch die zentrische Bohrung 34 der Schlitzscheibe 29 und durch die Mittelbohrung der Nabe 19 in die Verschlußbuchse 32 gesteckt. Dabei wird der Bajonettstift 45 in den Längsschlitzen der Verschlußbuchse 32 nach unten geführt. Der Anzugbolzen 31 wird gedreht, der Bajonettstift 45 dabei in den Querschlitzen geführt. Durch Betätigung des pneumatischen Elementes 33 wird der Anzugbolzen 31 nach unten gezogen. Die kleine Platte 43 drückt die Anpreßplatte 30 und die Deckscheibe 2 an den radial äußeren konkaven Teil der Oberkanten 9 der Schaufeln 3 und zentriert die Deckscheibe 2 bezüglich der Radscheibe 1. Die Schaufeln 3 und die Deckscheibe 2 sind nun auch positioniert und arretiert.

Das in der Spannvorrichtung fixierte Rad wird nun mittels des Drehtisches 47 dem Schweißroboter 46 zugeführt. Der Schweißroboter 46 setzt nach einem NC-Programm mehrere kurze Schweißnähte: sogenannte Heftstellen. An jeder Schaufel 3 des Ventilatorrades setzt er an der Oberkante 9 der Schaufel 3 eine Heftstelle von außen an der Bohrung 8 der Deckscheibe 2, zwei weitere von innen und an der Unterkante 13 der Schaufel 3 drei von innen.

Das geheftete Rad wird aus der Schweißposition 49 in die Montierposition 50 gedreht. Das pneumatische Element 33 an der Verschlußbuchse 32 wird entspannt, der Bajonettverschluß gelöst und der Anzugbolzen 31, die Anpreßplatte 30 und die Schlitzscheibe 29 durch den Bediener entfernt. Das geheftete Rad wird nun durch die arretierte Radscheibe 1 gehalten. Der Drehtisch 47 führt es wieder in die Schweißposition 49 und nach einem NC-Programm erfolgt im zweiten Arbeitsschritt das eigentliche Schweißen des im ersten Arbeitsschritt gehefteten Rades. Die Schweißpistole des Schweißroboters 46 hat guten Zugang von innen zu den Oberkanten 9 und Unterkanten 13 der Schaufeln 3. Es werden doppelseitige, durchgehende Schweißnähte angebracht.

Nach erfolgter Schweißung schwenkt der Drehtisch 47 den Werkstückmanipulator 48 in die Montierposition 50 zum Bediener zurück, der durch Betätigen der pneumatischen Elemente 17 den Druck der Druckplatte 18 gegen die äußeren und inneren Spannocken 22, 26 löst und das fertige Rad, nachdem er die Druckplatte 18 mit dem Griff 25 um die halbe Schaufeldrehung zurückgedreht hat, der Spannvorrichtung entnimmt.

Während des Heftens des Rades in der Schweißposition 49 wird vom Bediener in der Montierposition 50 auf dem zweiten Werkstückmanipulator 48 ein zweites Rad positioniert und arretiert. Es gelangt automatisch von der Montierposition 50 in die Schweißposition 49, wenn das erste Rad von der Schweißposition 49 in die Montierposition 50 gedreht wird und umgekehrt. In der Schweißposition 49 wird das zweite Rad geheftet, und, nachdem der obere Teil der Spannvorrichtung während des Schweißens des ersten Rades entfernt worden ist, geschweißt.

Bei einem größeren erfindungsgemäßen Ventilatorrad eines zweiten Beispiels ist die Deckscheibe 2 frei von Bohrungen. Bei diesem Ventilatorrad setzt der Schweißroboter 46 eine Heftstelle von innen an die Spitze 10 jeder Schaufel 3 von oben durch die entsprechend großen Aussparungen 41 der Anpreßplatte 30 hindurch.

Bei einem dritten Beispiel, einem kleineren erfindungsgemäßen Ventilatorrad, sind auch an den Oberkanten 9 der Schaufeln 3 Zungen 51 ausgebildet. An jeder Schaufel 3 befindet sich am konkav gekrümmten Teil der Oberkante 9 in der Nähe der Spitze 10 eine etwa hakenförmig gekrümmte Zunge 51, die in die entsprechende Bohrung 8 der Deckscheibe 2 hineinragt. Beim Spannen der Radteile werden die Bohrungen 8 der Deckscheibe 2 über die Zungen 51 gesteckt und beim Heften die Heftstellen von außen an den Zungen 51 gesetzt. Diese Zungen 51 erleichtern das Positionieren und erhöhen die Stabilität des Rades.

Zur weiteren Verdeutlichung des Anwendungsbereichs der Erfindung sind in der Tabelle Bereiche für einige der ein Ventilatorrad charakterisierenden Größen und die entsprechenden Werte des ersten Beispiels aufgeführt. Die Anzahl der Ausstanzungen 4, 6 am Innen- und Außendurchmesser der Radscheibe 1, der inneren und äußeren Spannocken 26, 22, der Bohrungen 8 in der Deckscheibe 2, der Schlitze 36 in der Schlitzscheibe 29 und der Aussparungen 41 in der Anpreßscheibe 30 stimmt mit der Anzahl der Schaufeln 3 überein. Die Anzahl der Bohrungen 5 in der Radscheibe 1 zur Befestigung der Motornabe variiert zwischen drei und zehn und die Anzahl der pneumatischen Druckelemente 17 zwischen zwei und acht.

Die Erfindung bezieht sich auf Räder für Radialventilatoren, die vom Niederdruckbereich (0 - 1000 Pa) über den Mitteldruckbereich (1000 - 3000 Pa) zun Hochdruckbereich (3000 - 10000 Pa) eingesetzt werden, und damit auf Räder sowohl für Lüftungsventilatoren (Nieder- und Mitteldruckbereich) als auch für Industrieventilatoren (Mittel- und Hochdruckbereich). Im Niederdruckbereich werden häufig Räder mit unterbrochenen Schweißnähten eingesetzt, im Hochdruckbereich im allgemeinen Räder mit durchgehenden Schweißnähten.

| | Bereich | Beispiel |
|---|---|---|
| Dicke der Radscheibe (mm) | 2 - 8 | 3 |
| Außendurchmesser der Radscheibe (mm) | 200 - 1.000 | 355 |
| Innendurchmesser der Radscheibe (mm) | 50 - 400 | 100 |
| Dicke der Deckscheibe (mm) | 1 - 4 | 1,5 |
| Dicke der Schaufeln (mm) | 1 - 6 | 1,5 |
| Heftstellen oben innen | 1 - 5 | 2 |
| unten innen | 2 - 5 | 3 |
| Anzahl der Schaufeln | 3 - 20 | 9 |

Tabelle: Daten erfindungsgemäßer Ventilatorräder

## Patentansprüche

**1.** Verfahren zum Schweißen von Rädern für Radialventilatoren, bei dem auf einem Werkstückmanipulator (48) mit einem Schweißroboter (46) Schaufeln (3) an eine Radscheibe (1) und eine Deckscheibe (2) geschweißt werden, dadurch gekennzeichnet, daß

- zunächst die Schaufeln (3), die Radscheibe (1) und die Deckscheibe (2) in zwei Stufen positioniert und arretiert werden, wobei in der ersten Stufe ein erster Teil und in der zweiten Stufe ein zweiter Teil einer Spannvorrichtung benutzt wird,
- anschließend die Schaufeln (3) auf dem Werkstückmanipulator (48) mit dem Schweißroboter (46) in einem ersten Arbeitsschritt angeheftet werden,
- nach dem Heften der zweite Teil der Spannvorrichtung entfernt wird und
- schließlich die Schaufeln (3) in einem zweiten Arbeitsschritt angeschweißt werden.

2. Verfahren nach Anspruch 1, dadurch gekennzeichnet, daß in der ersten Stufe die Radscheibe (1) und in der zweiten Stufe die Schaufeln (3) und die Deckscheibe (2) positioniert und arretiert werden.

3. Verfahren nach Anspruch 2, dadurch gekennzeichnet, daß in der zweiten Stufe aufeinanderfolgend
   - die Schaufeln (3) positioniert werden,
   - die Deckscheibe (2) positioniert wird und
   - die Schaufeln (3) und die Deckscheibe (2) zusammen arretiert werden.

4. Verfahren nach Anspruch 3, dadurch gekennzeichnet, daß beim Positionieren der Schaufeln (3) Zungen (14) an den Unterkanten (13) in entsprechende Bohrungen (7) der Radscheibe (1) gesteckt werden.

5. Verfahren nach Anspruch 3 oder 4, dadurch gekennzeichnet, daß beim Positionieren der Deckscheibe (2) Bohrungen (8) in der Nähe des Innendurchmessers der Deckscheibe (2) über Oberkanten (9) der Schaufeln (3) gebracht werden.

6. Verfahren nach Anspruch 5, dadurch gekennzeichnet, daß beim Positionieren der Deckscheibe (2) die Bohrungen (8) in der Deckscheibe (2) über Zungen (51) an den Oberkanten (9) der Schaufeln (3) gebracht werden.

7. Verfahren nach einem der Ansprüche 1 bis 6, dadurch gekennzeichnet, daß in dem ersten Arbeitsschritt die Schaufeln (3) von innen an die Radscheibe (1) und an die Deckscheibe (2) geheftet werden, wobei der Schweißroboter (46) pro Schaufel (3) mindestens eine Heftstelle an die Deckscheibe (2) und mindestens zwei Heftstellen an die Radscheibe (1) setzt.

8. Verfahren nach Anspruch 7, dadurch gekennzeichnet, daß der Schweißroboter (46) eine der Heftstellen an die Deckscheibe (2) an einer Spitze (10) der Schaufel (3) setzt.

9. Verfahren nach Anspruch 7, dadurch gekennzeichnet, daß in dem ersten Arbeitsschritt jede Schaufel (3) an einer Bohrung (8) in der Deckscheibe (2) von außen angeheftet wird.

10. Verfahren nach einem der Ansprüche 1 bis 9 dadurch gekennzeichnet, daß in dem zweiten Arbeitsschritt die Schaufeln (3) von innen an beiden Seiten mit einer Kehlnaht an die Deckscheibe (2) und an die Radscheibe (1) geschweißt werden.

11. Verfahren nach einem der Ansprüche 1 bis 9, dadurch gekennzeichnet, daß in dem zweiten Arbeitsschritt die Schaufeln (3) von innen mit wechselseitig unterbrochenen Kehlnähten an die Deckscheibe (2) und an die Radscheibe (1) geschweißt werden.

12. Verfahren nach einem der Ansprüche 1 bis 11, dadurch gekennzeichnet, daß zwischen dem ersten und dem zweiten Arbeitsschritt der Werkstückmanipulator (48) mit dem Ventilatorrad aus der Schweißposition (49) herausgedreht wird, während ein zweiter Werkstückmanipulator (48) mit einem positionierten und arretierten Ventilatorrad zum Heften in die Schweißposition (49) gedreht wird.

13. Verwendung einer Spannvorrichtung mit pneumatischen Elementen (17, 33) zur Durchführung des Verfahrens nach einem der Ansprüche 1 bis 12, dadurch gekennzeichnet, daß
   - die Spannvorrichtung aus einem ersten Teil zum Positionieren und Arretieren der Radscheibe (1) und einem zweiten Teil zum Positionieren und Arretieren der Schaufeln (3) und der Deckscheibe (2) besteht und
   - der zweite Teil über eine schnell lösliche Verbindung mit mindestens einem eigenen pneumatischen Element (33) mit dem ersten Teil verbunden ist.

14. Verwendung einer Spannvorrichtung nach Anspruch 13, dadurch gekennzeichnet, daß die Verbindung ein Bajonettverschluß ist.

15. Verwendung ein Spannvorrichtung nach Anspruch 13 oder 14, dadurch gekennzeichnet, daß der erste Teil der Spannvorrichtung aus
   - einer Grundplatte (16), auf der pneumatische Elemente (17) angeordnet sind und an der mehrere äußere Spannocken (22) befestigt sind,

- einer Druckplatte (18), die auf den pneumatischen Elementen (17) liegt, und
- einer Nahe (19), die in einer zentralen Bohrung der Grundplatte (16) steht und die an der Grundplatte (16) befestigt ist,

besteht.

**16.** Verwendung einer Spannvorrichtung nach Anspruch 15, dadurch gekennzeichnet, daß sich auf der Grundplatte (16) ein Außenring (21), in dessen Inneren die pneumatischen Elemente (17) und die Druckplatte (18) liegen und auf dem die äußeren Spannocken (22) befestigt sind, befindet.

**17.** Verwendung einer Spannvorrichtung nach einem der Ansprüche 13 bis 16, dadurch gekennzeichnet, daß der zweite Teil der Spannvorrichtung aus

- einer Schlitzscheibe (29) zum Senkrechtpositionieren der Schaufeln (3),
- einer Anpreßplatte (30), die auf der Deckscheibe (2) liegt, und
- einem Anzugbolzen (31), der über eine Verschlußbuchse (32) mit dem pneumatischen Element (33) verbunden ist,

besteht.

**18.** Verwendung einer Spannvorrichtung nach Anspruch 17, dadurch gekennzeichnet, daß die Anpreßplatte (30) zum Zentrieren der Deckscheibe (2) am Außendurchmesser einen Absatz (40) aufweist.

## Claims

**1.** A process for welding wheels for radial fans, wherein blades (3) are welded by a welding robot (46) onto a wheel disc (1) and a cover disc (2) on a workpiece manipulator (48), **characterised in that**

- first, the blades (3), the wheel disc (1) and the cover disc (2) are positioned and locked in two stages, a first part of a clamping device being used in a first stage, and a second part thereof being used in a second stage;
- the blades (3) on the workpiece manipulator (48) are then tack-welded by means of the welding robot (46) in a first working step;
- after the tack-welding, the second part of the clamping device is removed;
- finally, the blades (3) are welded on in a second working step.

**2.** A process in accordance with claim 1, **characterised in that** in the first stage, the wheel disc (1) is positioned and locked, and in the second stage the blades (3) and the cover disc (2) are positioned and locked.

**3.** A process in accordance with claim 2, **characterised in that** in the second stage, in succession:

- the blades (3) are positioned;
- the cover disc (2) is positioned; and
- the blades (3) and the cover disc (2) are locked together.

**4.** A process in accordance with claim 3, **characterised in that** when positioning the blades (3), tongues (14) on the lower edges (13) thereof are inserted into corresponding bores (7) in the wheel disc (1).

**5.** A process in accordance with claim 3 or 4, **characterised in that** when positioning the cover disc (2), bores (8) in the vicinity of the interior diameter of the cover disc (2) are brought into position above upper edges (9) of the blades (3).

**6.** A process in accordance with claim 5, **characterised in that** when positioning the cover disc (2), the bores (8) in the cover disc (2) are brought into position above tongues (51) on the upper edges (9) of the blades (3).

**7.** A process in accordance with one of claims 1 to 6, **characterised in that** in the first working step, the blades (3) are tack-welded from the inside to the wheel disc (1) and the cover disc (2), the welding robot (46) placing at least one tack-welding point per blade (3) on the cover disc (2) and at least two tack-welding points on the wheel disc (1).

**8.** A process in accordance with claim 7, **characterised in that** the welding robot (46) places one of the tack-welding points on the cover disc (2) at a point (10) of the blade (3).

**9.** A process in accordance with claim 7, **characterised in that** in the first working step, each blade (3) is tack-welded from the outside to a bore (8) in the cover disc (2).

**10.** A process in accordance with one of claims 1 to 9, **characterised in that** in the second working step the blades (3) are welded from the interior onto the cover disc (2) and on the wheel disc (1), with a fillet weld on both sides.

**11.** A process in accordance with one of claims 1 to 9, **characterised in that** in the second working step, the blades (3) are welded from the interior with alternately interrupted fillet welds on the cover disc (2) and on the wheel disc (1).

**12.** A process in accordance with one of claims 1 to 11, **characterised in that** between the first and the second working steps, the workpiece manipulator (48), together with the fan wheel, is pivoted out of the welding position (49), whilst a second workpiece manipulator (48) with a positioned and locked fan wheel is pivoted into the welding position (49) for tack-welding.

**13.** Use of a clamping device with pneumatic members (17, 33) to carry out the process in accordance with one of claims 1 to 12, **characterised in that**

- the clamping device comprises a first part for positioning and locking the wheel disc (1) and a second part for positioning and locking the blades (3) and the cover disc (2); and
- the second part is connected to the first part by means of a rapidly releasable connection with at least one separate pneumatic member (33).

**14.** Use of a clamping device in accordance with claim 13, **characterised in that** the connection is a bayonet catch.

**15.** Use of a clamping device in accordance with claim 13 or 14, **characterised in that** the first part of the clamping device comprises:

- a base plate (16) on which pneumatic members (17) are arranged and a plurality of external clamping cams (22) are secured;
- a pressure plate (18) resting on the pneumatic members (17);

and

- a hub (19) positioned in a central bore in the base plate (16) and secured thereto.

**16.** Use of a clamping device in accordance with claim 15, **characterised in that** an exterior ring (21) is located on the base plate (16), and the pneumatic members (17) and the pressure plate (18) are positioned in the interior of the said ring, and the external clamping cams (22) are secured thereon.

**17.** Use of a clamping device in accordance with one of claims 13 to 16, **characterised in that** the second part of the clamping device comprises:

- a slotted disc (29) for vertical positioning of the blades (3);
- a pressure plate (30) resting on the cover wheel (2); and
- a tightening bolt (31) connected to the pneumatic member (33) by means of a sealing sleeve (32).

**18.** Use of a clamping device in accordance with claim 17, **characterised in that** the pressure plate (30) has a shoulder (40) on its exterior diameter for centring the cover disc (2).

**Revendications**

**1.** Procédé de soudage de roues de ventilateurs radiaux, dans lequel des pales (3) sont soudées à un disque de roue (1) et à un disque de recouvrement (2) sur un manipulateur de pièces (48), à l'aide d'un robot de soudage (46), caractérisé par le fait que

- les pales (3), le disque de roue (1) et le disque de recouvrement (2) sont tout d'abord positionnés et arrêtés en deux étapes, une première partie et une seconde partie d'un dispositif de serrage étant respectivement utilisées durant la première étape et durant la seconde étape,

- les pales (3) sont ensuite consignées par pointage lors d'une première passe de travail, sur le manipulateur de pièces (48) et au moyen du robot de soudage (46),
- la seconde partie du dispositif de serrage est démontée à l'issue du pointage, et
- les pales (3) sont, pour finir, rapportées par soudage lors d'une seconde passe de travail.

**2.** Procédé selon la revendication 1, caractérisé par le fait que le disque de roue (1) est positionné et arrêté durant la première étape, et les pales (3) et le disque de recouvrement (2) sont positionnés et arrêtés durant la seconde étape.

**3.** Procédé selon la revendication 2, caractérisé par le fait que successivement, durant la seconde étape,

- les pales (3) sont positionnées,
- le disque de recouvrement (2) est positionné, et
- les pales (3) et le disque de recouvrement (2) sont conjointement arrêtés.

**4.** Procédé selon la revendication 3, caractérisé par le fait que, lors du positionnement des pales (3), des languettes (14) situées sur les bords inférieurs (13) sont emboîtées dans des trous correspondants (7) du disque de roue (1).

**5.** Procédé selon la revendication 3 ou 4, caractérisé par le fait que, lors du positionnement du disque de recouvrement (2), des trous (8) ménagés à proximité de la circonférence intérieure du disque de recouvrement (2) sont présentés au-dessus de bords supérieurs (9) des pales (3).

**6.** Procédé selon la revendication 5, caractérisé par le fait que, lors du positionnement du disque de recouvrement (2), les trous (8) ménagés dans ce disque de positionnement (2) sont présentés au-dessus de languettes (51) façonnées sur les bords supérieurs (9) des pales (3).

**7.** Procédé selon lune des revendications 1 à 6, caractérisé par le fait que, au cours de la première passe de travail, les pales (3) sont consignées par pointage sur le disque de roue (1) et sur le disque de recouvrement (2), de l'intérieur vers l'extérieur, le robot de soudage (46) ménageant, pour chaque pale (3), au moins une zone de pointage sur le disque de recouvrement (2) et au moins deux zones de pointage sur le disque de roue (1).

**8.** Procédé selon la revendication 7, caractérisé par le fait que, sur le disque de recouvrement (2), le robot de soudage (46) ménage l'une des zones de pointage sur une pointe (10) de la pale (3).

**9.** Procédé selon la revendication 7, caractérisé par le fait que, lors de la première passe de travail, chaque pale (3) est consignée par pointage, de l'extérieur vers l'intérieur, sur un trou (8) pratiqué dans le disque de recouvrement (2).

**10.** Procédé selon l'une des revendications 1 à 9, caractérisé par le fait que, lors de la seconde passe de travail, les pales (3) sont soudées de l'intérieur vers l'extérieur au disque de recouvrement (2) et au disque de roue (1), des deux côtés, au moyen d'une soudure d'angle.

**11.** Procédé selon l'une des revendications 1 à 9, caractérisé par le fait que, lors de la seconde passe de travail, les pales (3) sont soudées de l'intérieur vers l'extérieur au disque de recouvrement (2) et au disque de roue (1), au moyen de soudures d'angle interrompues alternativement.

**12.** Procédé selon l'une des revendications 1 à 11, caractérisé par le fait que, entre les première et seconde passes de travail le manipulateur de pièces (48) présentant la roue de ventilateur est animé d'une rotation hors de la position de soudage (49), tandis qu'un second manipulateur de pièces (48), présentant une roue de ventilateur positionnée et arrêtée, est amené par rotation à la position de soudage (49) en vue du pointage.

**13.** Utilisation d'un dispositif de serrage équipé d'éléments pneumatiques (17, 33), pour la mise en oeuvre du procédé selon l'une des revendications 1 à 12, caractérisée par le fait que

- le dispositif de serrage se compose d'une première partie conçue pour positionner et arrêter le disque de roue (1), et d'une seconde partie conçue pour positionner et arrêter les pales (3) et le disque de recouvrement (2), et
- la seconde partie est reliée à la première partie par l'intermédiaire d'une liaison à dissociation rapide, présentant au moins un propre élément pneumatique (33).

**14.** Utilisation d'un dispositif de serrage selon la revendication 13, caractérisée par le fait que la liaison est une fermeture à baïonnette.

**15.** Utilisation d'un dispositif de serrage selon la revendication 13 ou 14, caractérisée par le fait que la première partie du dispositif de serrage comprend
- une plaque de base (16) sur laquelle des éléments pneumatiques (17) sont disposés, et à laquelle plusieurs mentonnets externes de blocage (22) sont fixés,
- une plaque de pression (18) reposant sur les éléments pneumatiques (17), et
- un moyeu (19) logé dans un trou central de la plaque de base (16), et fixé à cette plaque de base (16).

**16.** Utilisation d'un dispositif de serrage selon la revendication 15, caractérisée par le fait qu'une bague extérieure (21) renfermant intérieurement les éléments pneumatiques (17) et la plaque de pression (18), et sur laquelle les mentonnets externes de blocage (22) sont fixés, se trouve sur la plaque de base (16).

**17.** Utilisation d'un dispositif de serrage selon l'une des revendications 13 à 16, caractérisée par le fait que la seconde partie du dispositif de serrage comprend
- un disque fendu (29) destiné au positionnement vertical des pales (3),
- une plaque de compression (30) reposant sur le disque de recouvrement (2), et
- un tirant d'ancrage (31) relié à l'élément pneumatique (33) par l'intermédiaire d'une douille d'obturation (32).

**18.** Utilisation d'un dispositif de serrage selon la revendication 17, caractérisée par le fait que la plaque de compression (30) présente un décrochement (40) à la circonférence extérieure, en vue du centrage du disque de recouvrement (2).

2
8
3
15
1
14, 7
5
Figur 1
2
8
1
5
6
4
7
3
Figur 2
51
10
9
11
3
3
12
15
13
14
Figur 3
Figur 4

44
43
30
40
31
2
42
45
35
3
27
29
28
19
26
23
1
22
25
18
21
24
17
16
20
33
32

Figur 5

34
29
35
36
37
30
38
39
41

Figur 6

Figur 7

46
22
21
48
8
2
3
1
49
47
31
2
3
26
1
50
30
29
19
18
16
17
33
48
2
3
26
1
22
21
19
18
17
16

Figur 8